(19) Europäisches Patentamt
European Patent Office
Office européen des brevets

(11) Veröffentlichungsnummer: **0 035 971**
**A2**

(12) # EUROPÄISCHE PATENTANMELDUNG

(21) Anmeldenummer: **81810072.9**

(22) Anmeldetag: **02.03.81**

(51) Int. Cl.³: **C 07 F 9/58**
A 01 N 57/16

(30) Priorität: **07.03.80 CH 1820/80**
**17.09.80 CH 6972/80**
**15.01.81 CH 243/81**

(43) Veröffentlichungstag der Anmeldung:
**16.09.81 Patentblatt 81/37**

(84) Benannte Vertragsstaaten:
**AT BE CH DE FR GB IT LI NL**

(71) Anmelder: **CIBA-GEIGY AG**
**Patentabteilung Postfach**
**CH-4002 Basel(CH)**

(72) Erfinder: **Pissiotas, Georg, Dr.**
**Breslauerstrasse 8**
**D-7850 Lörrach(DE)**

(72) Erfinder: **Beriger, Ernst, Dr.**
**Grabenmattweg 29**
**CH-4123 Allschwil(CH)**

(54) **Oximphosphate, Verfahren zu ihrer Herstellung und ihre Verwendung in der Schädlingsbekämpfung.**

(57) Oximphosphate der Formel

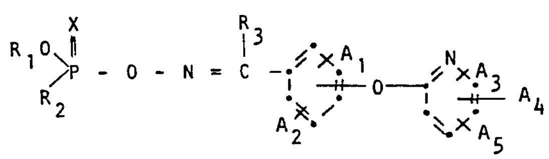

worin

$R_1$ $C_1$-$C_6$-Alkyl,
$R_2$ $C_1$-$C_7$-Alkoxy oder $C_1$-$C_6$-Alkylthio,
$R_3$ Wasserstoff, $C_1$-$C_6$-Alkyl oder Cyano,
$A_1$, $A_2$, $A_3$ und $A_4$ je Wasserstoff oder Halogen,
$A_5$ Wasserstoff, Halogen, Trifluormethyl oder $C_1$-$C_6$-Alkyl und
X Sauerstoff oder Schwefel bedeuten,

ein Verfahren zur ihrer Herstellung und ihre Verwendung in der Schädlingsbekämpfung.

EP 0 035 971 A2

CIBA-GEIGY AG
Basel (Schweiz)

Case 5-12744/1-3

# Oximphosphate, Verfahren zu ihrer Herstellung und ihre Verwendung in der Schädlingsbekämpfung

Die vorliegende Erfindung betrifft Oximphosphate, Verfahren zu ihrer Herstellung und ihre Verwendung in der Schädlingsbekämpfung.

Die Oximphosphate haben die Formel

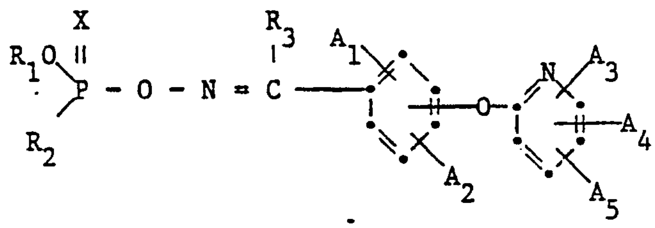

(I) ,

worin

$R_1$ $C_1$-$C_6$-Alkyl,
$R_2$ $C_1$-$C_7$-Alkoxy oder $C_1$-$C_6$-Alkylthio,
$R_3$ Wasserstoff, $C_1$-$C_6$-Alkyl oder Cyano,
$A_1$, $A_2$, $A_3$ und $A_4$ je Wasserstoff oder Halogen,
$A_5$ Wasserstoff, Halogen, Trifluormethyl oder $C_1$-$C_6$-Alkyl und
X Sauerstoff oder Schwefel bedeuten.

Unter Halogen sind dabei Fluor, Chlor, Brom oder Jod, insbesondere aber Chlor oder Brom, zu verstehen.

Die in Frage kommenden Alkyl-, Alkoxy- oder Alkylthiogruppen können geradkettig oder verzweigt sein. Beispiele solcher Gruppen sind u.a.: Methyl, Methoxy, Aethyl, Aethoxy, n-Propyl, n-Propoxy,

n-Propylthio, Isopropyl, n-, i-, sek.-, tert.-Butyl, n-, i-, sek.-Butylthio, n-Pentyl, n-Hexyl und deren Isomere.

Wegen ihrer Wirkung bevorzugt sind Verbindungen der Formel I, worin

$R_1$ Methyl oder Aethyl,
$R_2$ Methoxy, Aethoxy, n-Propylthio, n-Butylthio, iso. Butylthio oder sek.-Butylthio,
$R_3$ Wasserstoff, Methyl oder Cyano,
$A_1$,$A_2$,$A_3$ und $A_4$ je Wasserstoff, Chlor, Brom oder Fluor,
$A_5$ Wasserstoff, Chlor, Trifluormethyl oder Methyl, und
X Sauerstoff oder Schwefel bedeuten.

Besonders bevorzugt sind Verbindungen der Formel I, worin
$R_1$ Methyl oder Aethyl,
$R_2$ Methoxy, Aethoxy, n-Propylthio, n-Butylthio, iso-Butylthio oder sek.Butylthio,
$R_3$ Wasserstoff, Methyl oder Cyano,
$A_1$ und $A_2$ je Wasserstoff,
$A_3$ und $A_4$ je Wasserstoff, Chlor, Brom oder Fluor,
$A_5$ Wasserstoff, Chlor, Trifluormethyl oder Methyl und
X Sauerstoff oder Schwefel bedeuten.

Insbesondere bevorzugt werden aber Verbindungen der Formel I, worin

$R_1$ Aethyl,
$R_2$ Aethoxy oder n-Propylthio,
$R_3$ Wasserstoff oder Methyl,
$A_1$, $A_2$ und $A_3$ je Wasserstoff,
$A_4$ und $A_5$ je Chlor und
X Schwefel bedeuten,
oder worin

$R_1$ Aethyl,
$R_2$ Aethoxy oder n-Propylthio,
$R_3$ Wasserstoff oder Methyl,
$A_1$, $A_2$ und $A_3$ je Wasserstoff,
$A_4$ und $A_5$ je Chlor und
X Sauerstoff bedeuten.

Die Verbindungen der Formel I werden nach an sich bekannten Methoden, z.B. wie folgt hergestellt:

1)
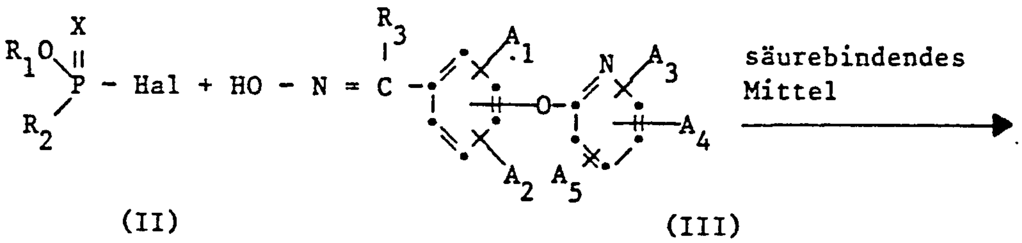

I

(II) (III)

2)
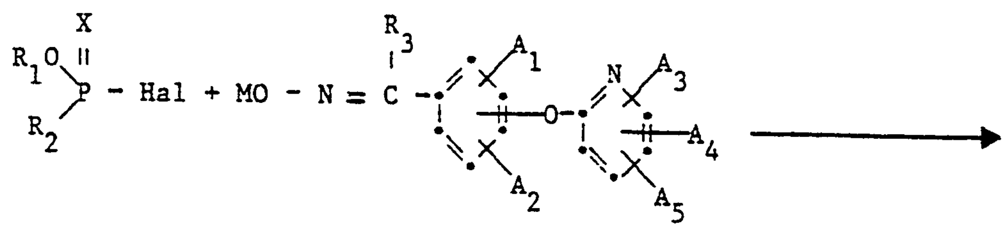
I

(II) (IV)

3) Herstellung von Verbindungen der Formel I, worin $R_2 = C_1-C_6$-Alkylthio und X = Sauerstoff bedeuten

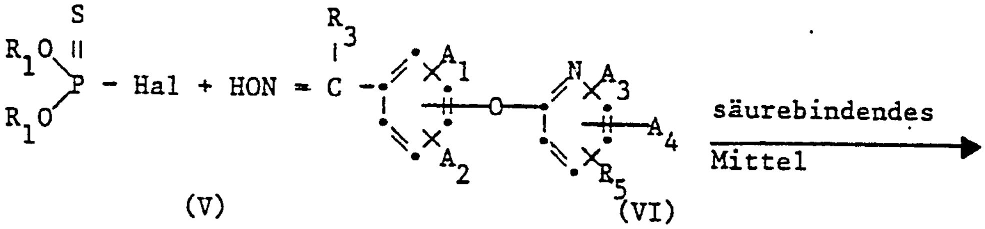

VII

(V) (VI)

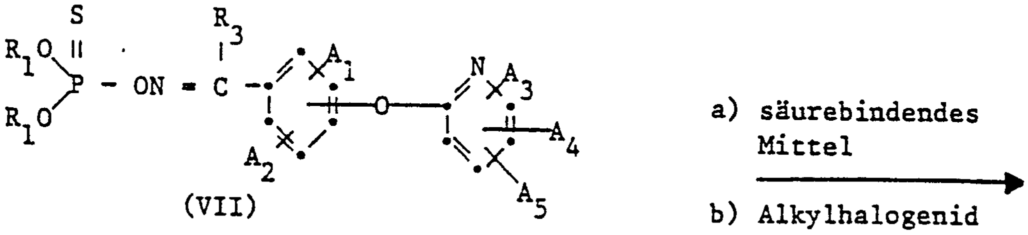

VIII

(VII)

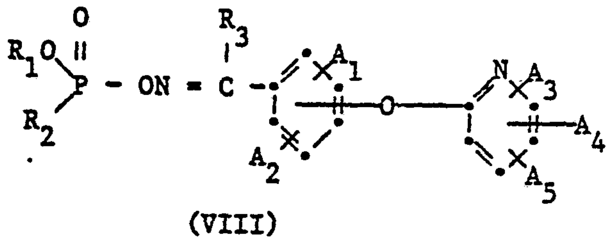

(VIII)

In den Formeln II bis VIII haben $R_1$, $R_2$, $R_3$, $A_1$ bis $A_5$ und X die gleiche Bedeutung wie für die Formel I, Hal steht für ein Halogenatom, insbesondere für Chlor oder Brom und M bedeutet ein Alkalimetallatom oder den Ammonium Rest.

Als säurebindendes Mittel für die Verfahren 1 - 3 kommen insbesondere tertiäre Amine, wie Trialkylamin und Pyridin, ferner Hydroxide, Oxide, Carbonate und Bicarbonate von Alkali und Erdalkalimetallen sowie Alkalimetallalkoholate wie z.B. Kalium-t.butylat und Natriummethylat in Betracht.

Die Verfahren 1 bis 3 werden bei einer Reaktionstemperatur zwischen -10 und 120°C, meist zwischen 20 und 80°C, bei normalem oder erhöhtem Druck und vorzugsweise in einem inerten Lösungs- oder Verdünnungsmittel durchgeführt. Als Lösungs- oder Verdünnungsmittel eignen sich z.B. Aether und ätherartige Verbindungen wie Diäthyläther, Dipropyläther, Dioxan, Dimethoxyäthan oder Tetrahydrofuran; Amide wie N,N-dialkylierte Carbonsäureamide; aliphatische, aromatische sowie halogenierte Kohlenwasserstoffe, insbesondere Benzol, Toluol, Xylol, Chloroform oder Chlorbenzol; Nitrile wie Acetonitril, Dimethylsulfoxid und Ketone wie Aceton oder Methyläthylketon.

Die Ausgangsstoffe der Formeln II bis VIII sind bekannt oder können analog bekannten Methoden hergestellt werden.

Die Verbindungen der Formel I eignen sich zur Bekämpfung von Schädlingen an Tieren und Pflanzen. Ferner haben diese Verbindungen fungizide und pflanzenregulatorische Eigenschaften.

Insbesondere eignen sich die Verbindungen der Formel I zur Bekämpfung von Insekten z.B. der Ordnung Lepidoptera, Coleoptera, Homoptera, Heteroptera, Diptera, Thysanoptera,Orthoptera,Anoplura, Siphonaptera, Mallophaga, Thysanura, Isoptera, Psocoptera und Hymenoptera sowie von Milben und Zecken der Ordnung Akarina.

Vor allem eignen sich Verbindungen der Formel I zur Bekämpfung von pflanzenschädigenden Insekten, insbesondere pflanzenschädigenden Frassinsekten, in Zier- und Nutzpflanzen, insbesondere in Baumwollkulturen (z.B. Spodoptera littoralis und Heliothis virescens) und Gemüsekulturen (z.B. Leptinotarsa decemlineata und Myzus persicae).

Wirkstoffe der Formel I zeigen auch eine günstige Wirkung gegen Fliegen wie z.B. Musca domestica und Mückenlarven, sowie gegen Bodeninsekten.

Die Verbindungen der Formel I können entweder in unveränderter Form oder zusammen mit den in der Formulierungstechnik üblichen Hilfsmitteln als Formulierungen, wie z.B. Emulsionskonzentrate, Suspensionskonzentrate, direkt versprühbare oder verdünnbare Lösungen, verdünnte Emulsionen, Spritzpulver, lösliche Pulver, Stäubemittel, Granulate, auch Feinstverkapselungen in polymeren Stoffen und dergleichen, in bekannter Weise eingesetzt werden. Die Anwendungsmethoden wie Versprühen, Vernebeln, Verstäuben, Verstreuen oder Giessen, richten sich ganz nach

den angestrebten Zielen. Dabei ist zu beachten, dass durch die Applikationsmethode sowie die Art und Menge der für die Zubereitung der Formulierung verwendeten Hilfsmaterialien das biologische Verhalten der Wirkstoffe der Formel I nicht nachteilig beeinflusst wird.

Die Formulierungen werden in bekannter Weise hergestellt, z.B. durch inniges Vermischen und/oder Vermahlen der Wirkstoffe mit Streckmitteln, wie z.B. mit Lösungsmitteln, festen Trägerstoffen und gegebenenfalls oberflächenaktiven Substanzen (Tensiden). Als Lösungsmittel können in Frage kommen: Aromatische Kohlenwasserstoffe, bevorzugt die Fraktionen $C_8$ bis $C_{12}$, d.h. Xylolgemische oder substituierte Naphthaline, aliphatische Kohlenwasserstoffe wie Cyclohexan oder Paraffine, Alkohole und Glykole sowie deren Aether und Ester, stark polare Lösungsmittel wie Dimethylsulfoxid oder Dimethylformamid, sowie Wasser. Als feste Trägerstoffe, z.B. für Stäubemittel und dispergierbare Pulver, werden meist natürliche Gesteinsmehle verwendet, wie Calcit, Talkum, Kaolinit, Montmorrillonit oder Attapulgit. Zur Verbesserung der physikalischen Eigenschaften können auch hochdisperse Kieselsäuren oder hochdisperse saugfähige Polymerisate zugesetzt werden. Als gekörnte adsorptive Granulatträger kommen poröse Typen wie z.B. Bimsstein, Ziegelbruch, Sepiolit und Bentonit, als nicht sorptive Trägermaterialien z.B. Calcit oder Sand in Frage. Darüberhinaus kann eine Vielzahl von granulierten Materialien anorganischer oder organischer Natur, wie insbesondere Dolomit bis hin zu zerkleinerten Pflanzenrückständen verwendet werden.

Als oberflächenaktive Substanzen kommen je nach der Polarität des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete kationaktive Tenside sind beispielsweise quaternäre Ammoniumverbindungen, wie z.B. Cetyltrimethyl-ammonium-bromid. Geeignete

anionaktive Tenside sind u.a. Seifen, Salze von aliphatischen Monoestern der Schwefelsäure, wie z.B. Natrium-laurylsulfat, Salze von sulfonierten aromatischen Verbindungen, wie z.B. Natriumdodecylbenzolsulfonat, Natrium-, Calcium- und Ammoniumligninsulfonat, Butylnaphthalinsulfonat oder ein Gemisch aus den Natriumsalzen von Diisopropyl- und Triisopropylnaphthalinsulfonat. Geeignete nichtionogene Tenside sind beispielsweise die Kondensationsprodukte von Aethylenoxid mit Fettalkoholen, wie z.B. Oleylalkohol oder Cetylalkohol, oder mit Alkylphenolen, wie z.B. Octylphenol, Nonylphenol oder Octylkresol. Andere nicht-ionische Mittel sind die Teilester, die sich von langkettigen Fettsäuren und Hexitanhydriden ableiten, die Kondensationsprodukte dieser Teilester mit Aethylenoxid und Lecithine.

Die in der Formulierungstechnik gebräuchlichen nichtionogenen, anion- und kationaktiven Tenside sind u.a. in folgenden Publikationen beschrieben:
"Mc Cutcheon's Detergents and Emulsifiers Annual" MC Publishing Corp., Ringewood, New Jersey, 1979.

Die formulierten Mittel enthalten in der Regel 0,1 bis 99%, insbesondere 0,1 bis 95%, Wirkstoff der Formel I und 0 bis 25% eines Tensides sowie 1 bis 99,9% eines festen oder flüssigen Zusatzstoffes.

Die Mittel können auch weitere Zusätze wie Stabilisatoren, Entschäumer, Viskositätsregulatoren, Bindemittel, Haftmittel sowie Dünger oder andere Wirkstoffe zur Erzeugung spezieller Effekte enthalten.

Die Wirkstoffe der Formel I können beispielsweise wie folgt formuliert werden: (Angaben in Gewichtsprozenten)

Stäubemittel: Zur Herstellung eines a) 5 %igen und b) 2 %igen Stäubemittels werden die folgenden Stoffe verwendet:

a) 5 Teile Wirkstoff
   95 Teile Talkum;

b) 2 Teile Wirkstoff
   1 Teil hochdisperse Kieselsäure
   97 Teile Talkum.

Der Wirkstoff wird mit den Trägerstoffen vermischt und vermahlen.

Granulat: Zur Herstellung eines 5 %igen Granulates werden die folgenden Stoffe verwendet:

5 Teile Wirkstoff
0,25 Teile epoxydiertes Pflanzenöl
0,25 Teile Cetylpolyglykoläther
3,50 Teile Polyäthylenglykol
91 Teile Kaolin (Korngrösse 0,3-0,8 mm)

Die Aktivsubstanz wird mit epoxydiertem Pflanzenöl vermischt und mit 6 Teilen Aceton gelöst, hierauf wird Polyäthylenglykol und Cetylpolyglykoläther zugesetzt. Die so erhaltene Lösung wird auf Kaolin aufgesprüht und anschliessend das Aceton im Vakuum verdampft.

Spritzpulver: Zur Herstellung eines a) 40 %igen, b) und c) 25 %igen, d) 10 %igen Spritzpulvers werden folgende Bestandteile verwendet:

a) 40 Teile Wirkstoff
   5 Teile Ligninsulfonsäure-Natriumsalz
   1 Teil Dibutylnaphthalinsulfonsäure-Natriumsalz
   54 Teile Kieselsäure;

b) 25 Teile Wirkstoff
   4,5 Teile Calcium-Ligninsulfonat
   1,9 Teile Champagne-Kreide/Hydroxyäthylcellulose Gemisch (1:1)

1,5 Teile Natrium-dibutyl-naphthalinsulfonat
19,5 Teile Kieselsäure
19,5 Teile Champagne-Kreide
28,1 Teile Kaolin;

c) 25 Teile Wirkstoff
2,5 Teile Isooctylphenoxy-polyäthylen-äthanol
1,7 Teile Champagne-Kreide/Hydroxyäthylcellulose-Gemisch (1:1)
8,3 Teile Natriumaluminiumsilikat
16,5 Teile Kieselgur
46 Teile Kaolin;

d) 10 Teile Wirkstoff
3 Teile Gemisch der Natriumsalze von gesättigten Fettalkoholsulfaten
5 Teile Naphthalinsulfonsäure/Formaldehyd-Kondensat
82 Teile Kaolin.

Der Wirkstoff wird in geeigneten Mischern mit dem Zuschlagstoff innig vermischt und auf entsprechenden Mühlen und Walzen vermahlen. Man erhält Spritzpulver, die sich mit Wasser zur Suspensionen jeder gewünschten Konzentration verdünnen lassen.

Emulgierbare Konzentrate: Zur Herstellung eines a) 10 %igen, b) 25 %igen und c) 50 %igen emulgierbaren Konzentrates werden folgende Stoffe verwendet:

a) 10 Teile Wirkstoff
3,4 Teile epoxydiertes Pflanzenöl
3,4 Teile eines Kombinationsemulgators, bestehend aus Fettalkoholpolyglykoläther und Alkylarylsulfonat-Calcium-Salz
40 Teile Dimethylformamid
43,2 Teile Xylol;

b) 25 Teile Wirkstoff
2,5 Teile epoxydiertes Pflanzenöl

10 Teile eines Alkylarylsulfonat/Fettalkoholpolyglykoläther-Gemisches
5 Teile Dimethylformamid
57,5 Teile Xylol;

c) 50 Teile Wirkstoff
4,2 Teile Tributylphenol-Polyglykoläther
5,8 Teile Calcium-Dodecylbenzolsulfonat
20 Teile Cyclohexanon
20 Teile Xylol.

Aus solchen Konzentraten können durch Verdünnen mit Wasser Emulsionen jeder gewünschten Konzentration hergestellt werden.

Sprühmittel: Zur Herstellung eines a) 5 %igen und b) 95 %igen Sprühmittels werden die folgenden Bestandteile verwendet:

a) 5 Teile Wirkstoff
1 Teil epoxydiertes Pflanzenöl
94 Teile Benzin (Siedegrenzen 160-190°C);

b) 95 Teile Wirkstoff
5 Teile epoxydiertes Pflanzenöl.

Beispiel 1: Herstellung der Verbindung der Formel

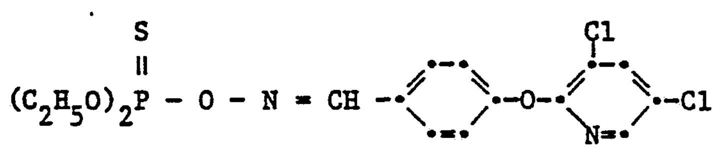

10 g Natriumsalz des 4-(2',4'-Dichlorpyridyl-1-oxy)-benzaldoxims werden in 70 ml Dimethylformamid verrührt. Man lässt bei 20 - 30°C 6 g Diäthylthiochlorphosphat zutropfen und rührt 12 Stunden weiter. Dann giesst man das Reaktionsgemisch auf Eiswasser, nimmt das ausgefallene Oel in Toluol auf, wäscht die Toluollösung mit Wasser und entfernt anschliessend das Toluol im Vakuum bei 50°C Badtemperatur. Nach dem Andestillieren des Rohproduktes im Hochvakuum bei 70°C erhält man 12 g

o,o-Diäthyl-o-(4-(3,5-dichlorpyridyl-2-oxy)-benzaldoxim)-thiophosphor mit einem Schmelzpunkt von 128-123°C. Auf analoge Weise werden auch folgende Verbindungen hergestellt.

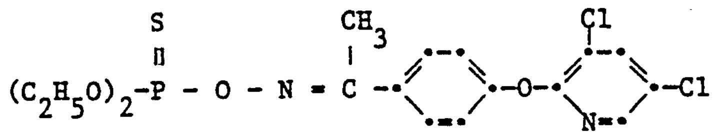

$n_D^{21°}$: 1,569

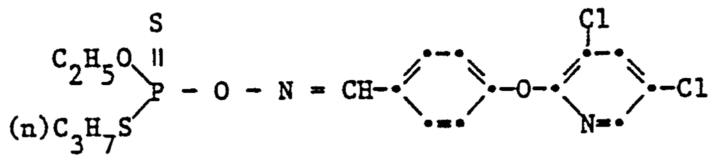

Smp.122-125°C

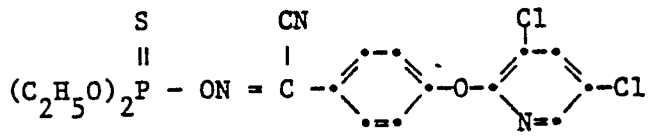

Smp.105-109°C

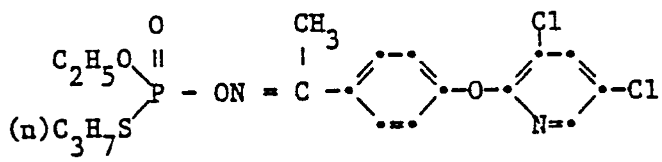

$n_D^{21°}$: 1,5683

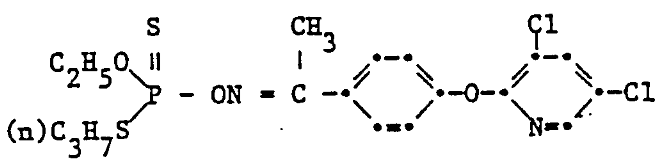

$n_D^{21°}$: 1,575

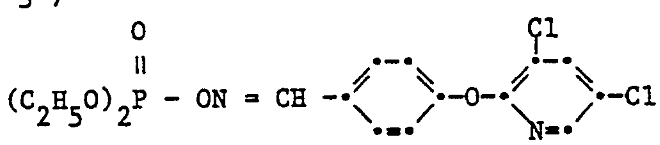

Smp.117-120°C

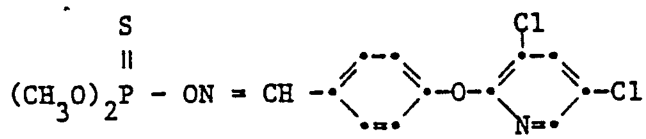

Smp.123-125°C

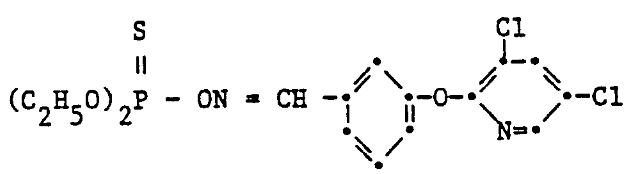

Smp. 78-80°C

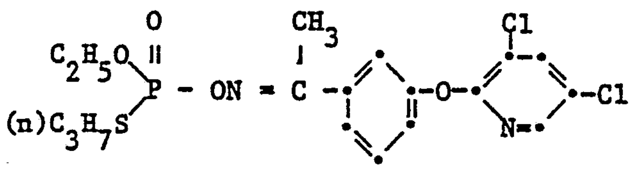

$n_D^{21°}$ : 1,575

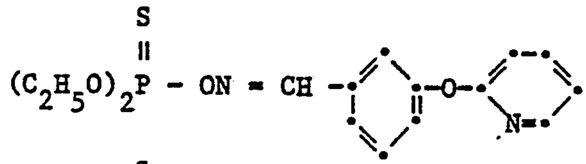

$n_D^{20°}$ : 1,563

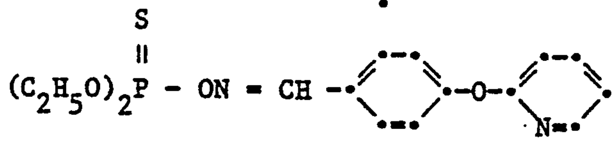

$n_D^{20°}$ : 1,545

Beispiel 2: Insektizide Frassgift-Wirkung: Spodoptera littoralis, Dysdercus fasciatus und Heliothis virescens

Baumwollpflanzen wurden mit einer Versuchslösung, enthaltend 50, 100, 200 oder 400 ppm der zu prüfenden Verbindung, besprüht.

Nach dem Antrocknen des Belages wurden die Pflanzen mit Larven der Spezies Spodoptera littoralis ($L_3$-Stadium), Dysdercus fasciatus ($L_3$) und Heliothis virescens ($L_3$) besetzt. Man verwendet dabei pro Versuchsverbindung und pro Test-Spezies je zwei Pflanzen, und eine Auswertung der erzielten Abtötungsrate erfolgte nach 2, 4, 24 und 48 Stunden. Der Versuch wurde bei 24°C und 60% relativer Luftfeuchtigkeit durchgeführt.

Innerhalb der oben angegebenen Konzentrationsgrenzen zeigten Verbindungen gemäss dem Herstellungsbeispiel 1 100%ige Wirkung gegen Larven der Spezies Spodoptera littoralis, Dysdercus fasciatus und Heliothis virescens.

Beispiel 3: Insektizide Kontakt-Wirkung: Myzus persicae

In Wasser angezogene Pflanzen (Vicia faba ) wurden vor dem Versuchsbeginn je mit ca. 200 Individuen der Spezies Mycus persicae besiedelt. Die so behandelten Pflanzen wurden 3 Tage später mit einer Lösung enthaltend 10 oder 1 ppm der zu prüfenden Verbindung aus 30 cm Distanz bis zur Tropfnässe besprüht. Man verwendete pro Test-Verbindung und pro Konzentration zwei Pflanzen, und eine Auswertung der erzielten Abtötungsrate erfolgte nach weiteren 24 Stunden.

Innerhalb der oben angegebenen Konzentrationsgrenzen zeigten Verbindungen gemäss Beispiel 1 eine 100%ige Wirkung gegen Insekten der Spezies Myzus persicae.

Beispiel 4: Insektizide systemische Wirkung: Aphis craccivora

Bewurzelte Bohnenpflanzen wurden in Töpfe, welche 600 ccm Erde enthalten, verpflanzt. Anschliessend wurden 50 ml einer Versuchslösung enthaltend 25 ppm, 5 ppm bzw. 1 ppm der zu prüfenden Verbindung direkt auf die Erde gegossen.

Nach 24 Stunden wurden auf die oberirdischen Pflanzenteile Blattläuse (Aphis craccivora) gesetzt und die Pflanzen mit einem unten zugeschnürten Plastikzylinder überstülpt, um die Läuse vor einer eventuellen Kontakt- oder Gaswirkung der Testsubstanz zu schützen.

Die Auswertung der erzielten Abtötung erfolgte 24 und 48 Stunden nach Versuchsbeginn. Pro Konzentrationsdosis Testsubstanz wurden zwei Pflanzen, je eine in einem separaten Topf, verwendet. Der Versuch wurde bei 25°C und 70% relativer Luftfeuchtigkeit durchgeführt.

Innerhalb der oben angegebenen Konzentrationsgrenzen zeigten Verbindungen gemäss Beispiel 1 eine 100%ige systemische Wirkung gegen Insekten der Spezies Aphis craccivora.

Beispiel 5: Akarizide Wirkung

Phaseolus vulgaris Pflanzen wurden 12 Stunden vor dem Test auf akaride Wirkung mit einem infestierten Blattstück aus einer Massenzucht von Tetranychus urticae belegt. Die übergelaufenen beweglichen Stadien wurden auf einem Chromatographiezerstäuber mit den emulgierten Testpräparaten derart besprüht, dass kein Ablaufen der Spritzbrühe eintrat. Nach zwei und 7 Tagen wurden Larven, Adulte und Eier unter dem Binokular auf lebende und tote Individuen ausgewertet und das Ergebnis in Prozenten ausgedrückt. Während der "Haltezeit" standen die behandelten Pflanzen in Gewächshauskabinen bei 25°C.

Beispiel 6: Wirkung gegen Zecken

A) Riphicephalus bursa
Je 5 adulte Zecken bzw. 50 Zeckenlarven wurden in ein Glasröhrchen gezählt und für 1 bis 2 Minuten in 2 ml einer wässrigen Emulsion aus einer Verdünnungsreihe mit je 100, 10, 1 oder 0,1 ppm Testsubstanz getaucht. Das Röhrchen wurde dann mit einem genormten Wattebausch verschlossen und auf den Kopf gestellt, damit die Wirkstoffemulsion von der Watte aufgenommen werden konnte.

Die Auswertung erfolgte bei den Adulten nach 2 Wochen und bei den Larven nach 2 Tagen. Für jeden Versuch liefen 2 Wiederholungen.

B) Boophilus microplus (Larven)
Mit einer analogen Verdünnungsreihe wie beim Test A) wurden mit je 20 sensiblen resp. OP-resistenten Larven Versuche durchgeführt. (Die Resistenz bezieht sich auf die Verträglichkeit von Diazinon).

Verbindungen gemäss Beispiel 1 wirkten in diesem Test innerhalb der oben angegebenen Konzentrationen gegen Adulte und Larven von Riphicephalus bursa und sensible resp. OP-resistente Larven von Boophilus microplus.

Beispiel 7: Wirkung gegen Bodeninsekten

Ein Liter Komposterde wurde mit 64 mg Spritzpulver enthaltend 25 % Wirkstoff gemischt.

Mit der behandelten Erde wurden junge Zucchettipflanzen (Cucumis pepo) in Plastiktöpfe eingetopft (drei Pflanzen pro Topf mit einem Durchmesser von 7 cm). Die Töpfe wurden unmittelbar nachher mit 5 Aulacophora femoralis-, Pachnoda- und Chortophila-Larven infestiert, wobei jede Testspezies in einen separaten Topf eingesetzt wurde. Die Kontrolle wurde 4, 8, 16 und 32 Tage nach Einsetzen der Larven durchgeführt.

Bei 80-100% Abtötung nach der ersten Kontrolle erfolgte eine neue Infestation mit je 5 Larven in das gleiche Erdmuster mit 3 neuen Zucchettipflanzen. Wenn die Wirkung geringer als 80% war, verblieben die restlichen Tiere in der Testerde bis zur nächstfolgenden Kontrolle. Bewirkte eine Substanz bei einer Aufwandmeng von 8 kg/ha 100% Abtötung, dann erfolgte eine Nachprüfung mit 4 resp. 2 kg Aktivsubstanz/ha.

Verbindungen gemäss Beispiel 1 zeigten im obigen Test 100%ige Wirkung gegen Aulacophora femoralis-, Pachnoda- und Chlortophila-Larven.

| | Minimal Konzentration in ppm zur 100%igen Abtötung von Spodoptera littoralis Larven | Aphid craccivora | Tetranychus urticae Larven | Rhipicephalus bursa Larven | X mg AS pro 1 Liter Erde zur 100% igen Abtötung von Pachnoda Larven |
|---|---|---|---|---|---|
| 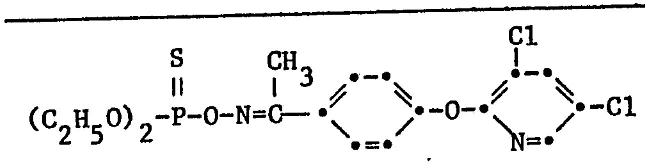 | 100 | 5 | 400 | 10 | 16 mg |
| 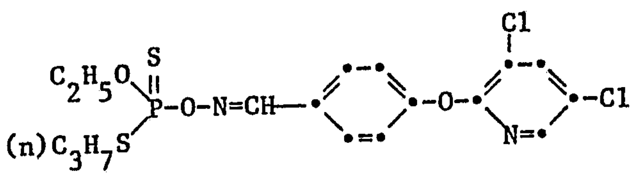 | 100 | 5 | 200 | 10 | 16 mg |
| 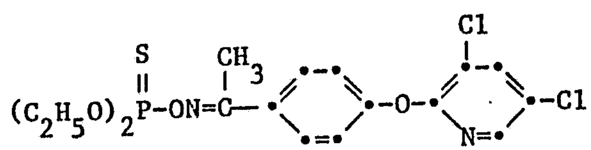 | 50 | 5 | 200 | 1 | - |
| 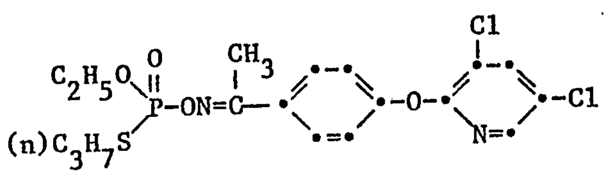 | 200 | 5 | 400 | 10 | - |

| | Minimal Konzentration in ppm zur 100%igen Abtötung von | | | | |
|---|---|---|---|---|---|
| | Spodoptera littoralis Larven | Aphid craccivora | Tetranychus urticae Larven | Rhipicephalus bursa Larven | X mg AS pro 1 Liter Erde zur 100% igen Abtötung von Pachnoda Larven |
| 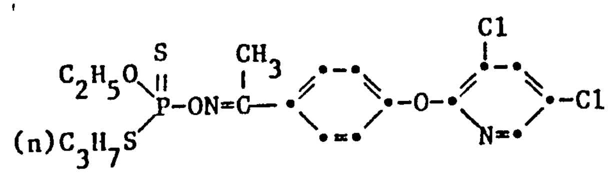 | 200 | 20 | 400 | 10 | - |
| 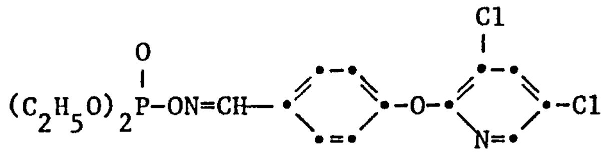 | 100 | 5 | 400 | 10 | 16 mg |
| 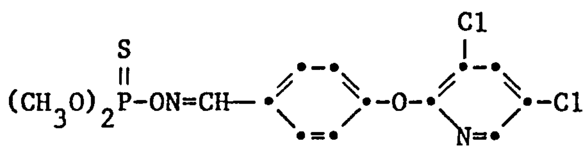 | 200 | 5 | 400 | 10 | - |
| 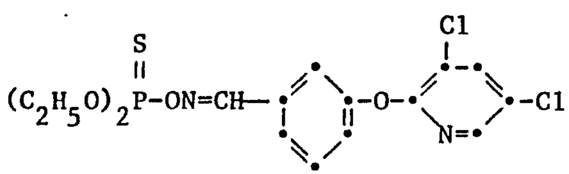 | 400 | 20 | 400 | 10 | - |

| | Minimal Konzentration in ppm zur 100%igen Abtötung von | | | | |
|---|---|---|---|---|---|
| | Spodoptera littoralis Larven | Aphid craccivora | Tetranychus urticae Larven | Rhipicephalus bursa Larven | X mg AS pro 1 Liter Erde zur 100% igen Abtötung von Pachnoda Larven |
| 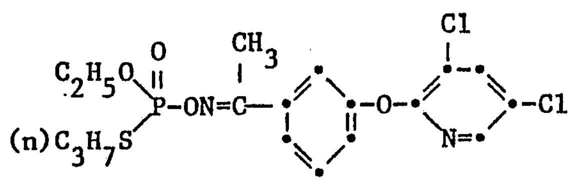 | 100 | 5 | 400 | 10 | - |
| 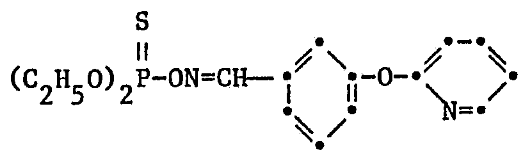 | 100 | 20 | 200 | 1 | - |
| 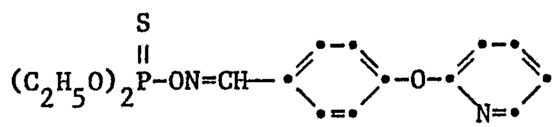 | 200 | 20 | 400 | 10 | - |
| 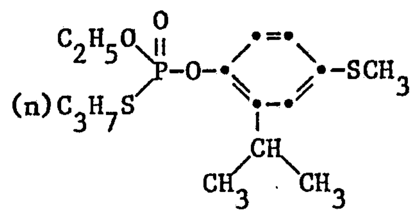 bekannt aus DOS 2,163,391 | 800 | - | 800 | - | - |

Patentansprüche

1. Ein Oximphosphat der Formel

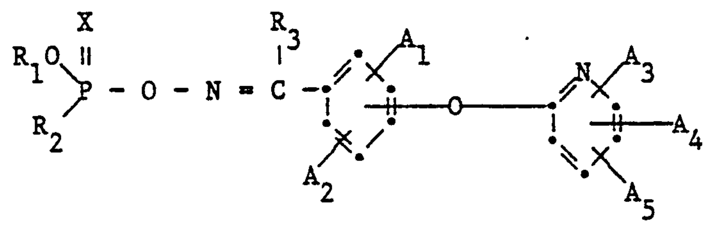

worin

$R_1$ $C_1$-$C_6$-Alkyl,

$R_2$ $C_1$-$C_7$-Alkoxy oder $C_1$-$C_6$-Alkylthio,

$R_3$ Wasserstoff, $C_1$-$C_6$-Alkyl oder Cyano,

$A_1$, $A_2$, $A_3$ und $A_4$ je Wasserstoff oder Halogen,

$A_5$ Wasserstoff, Halogen, Trifluormethyl oder $C_1$-$C_6$-Alkyl und

X Sauerstoff oder Schwefel bedeuten.

2. Eine Verbindung gemäss Anspruch 1, worin

$R_1$ Methyl oder Aethyl,

$R_2$ Methoxy, Aethoxy, n-Propylthio, n-Butylthio, iso-Butylthio oder sek.-Butylthio,

$R_3$ Wasserstoff, Methyl oder Cyano,

$A_1$, $A_2$, $A_3$ und $A_4$ je Wasserstoff, Chlor, Brom oder Fluor,

$A_5$ Wasserstoff, Chlor, Trifluormethyl oder Methyl und

X Sauerstoff oder Schwefel bedeuten.

3. Eine Verbindung gemäss Anspruch 2,

worin

$R_1$ Methyl oder Aethyl,

$R_2$ Methoxy, Aethoxy, n-Propylthio, n-Butylthio, iso-Butylthio oder sek.Butylthio,

$R_3$ Wasserstoff, Methyl oder Cyano,

$A_1$ und $A_2$ je Wasserstoff,

$A_3$ und $A_4$ je Wasserstoff, Chlor, Brom oder Fluor,

$A_5$ Wasserstoff, Chlor, Trifluormethyl oder Methyl und

X Sauerstoff oder Schwefel bedeuten.

4. Eine Verbindung gemäss Anspruch 3, worin

$R_1$ Aethyl,

$R_2$ Aethoxy oder n-Propylthio,

$R_3$ Wasserstoff oder Methyl

$A_1$, $A_2$ und $A_3$ je Wasserstoff,

$A_4$ und $A_5$ je Chlor und

X Schwefel bedeuten.

5. Eine Verbindung gemäss Anspruch 3, worin

$R_1$ Aethyl,

$R_2$ Aethoxy oder n-Propylthio,

$R_3$ Wasserstoff oder Methyl

$A_1$, $A_2$ und $A_3$ je Wasserstoff,

$A_4$ und $A_5$ je Chlor und

X Sauerstoff bedeuten.

6. Die Verbindung gemäss Anspruch 4 der Formel

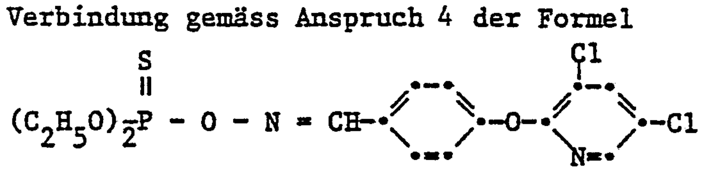

7. Die Verbindung gemäss Anspruch 4 der Formel

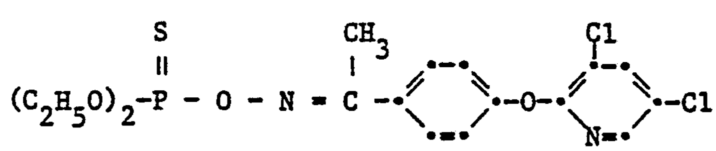

8. Die Verbindung gemäss Anspruch 4 der Formel

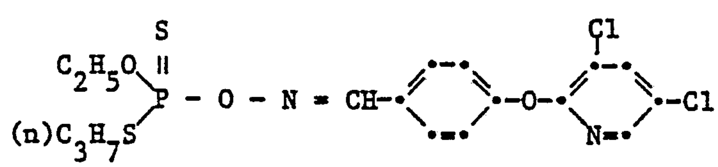

9. Die Verbindung gemäss Anspruch 5 der Formel

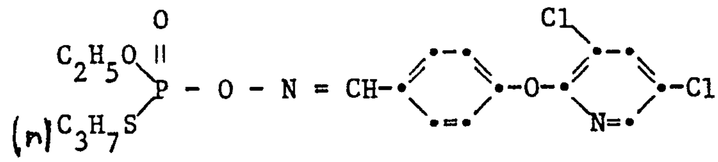

10.Ein Verfahren zur Herstellung von Verbindungen gemäss Anspruch 1, dadurch gekennzeichnet, dass man eine Verbindung der Formel

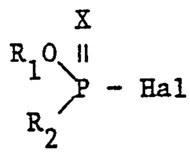

in Gegenwart eines säurebindenden Mittels mit einer Verbindung der Formel

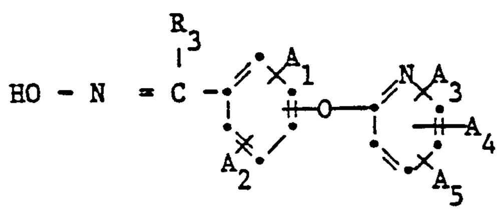

oder mit einer Verbindung der Formel

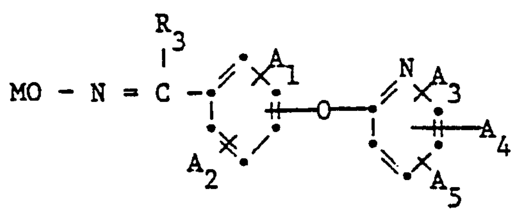

umsetzt, worin $R_1$, $R_2$, $R_3$, $A_1$ bis $A_5$ und X die im Anspruch 1 angegebene Bedeutung haben und M für ein Alkalimetallatom oder den Ammonium Rest steht.

11. Ein Schädlingsbekämpfungsmittel, welches neben geeigneten Träger- und/oder anderen Zuschlagstoffen als aktive Komponente eine Verbindung gemäss Anspruch 1 enthält.

12.Eine Methode zur Bekämpfung von Schädlingen an Tieren und Pflanzen, dadurch gekennzeichnet, dass man eine Verbindung gemäss Anspruch 1 entweder allein oder zusammen mit geeigneten Trägerstoffen dazu verwendet.

13. Eine Methode gemäss Anspruch 9 zur Bekämpfung von Insekten und Vertretern der Ordnung Akarina.